# EUROPEAN PATENT SPECIFICATION

(11) **EP 3 549 494 B1**
(45) Date of publication and mention of the grant of the patent: **11.11.2020**
(21) Application number: 19163375.9
(22) Date of filing: 18.03.2019
(51) Int. Cl.: A47J 31/38

(54) **LEVER-OPERATED DISPENSING UNIT FOR COFFEE MACHINES**
HANDHEBEL AUSGABEEINHEIT FÜR KAFFEEMASCHINEN
UNITÉ DE DISTRIBUTION À LEVIER POUR MACHINES À CAFÉ

(30) Priority: 22.03.2018 IT 201800003883
(43) Date of publication of application: 09.10.2019
(73) Proprietor: Gruppo Cimbali S.p.A., 20082 Binasco (MI) (IT)
(72) Inventor: Maltoni, Enrico, 20082 Binasco (IT); Piazzi, Oliver, 20082 Binasco (IT); Ricci, Matteo, 20082 Binasco (IT)
(74) Representative: Perani & Partners S.p.A.

(56) References cited:
- GB-A- 765 801
- GB-A- 1 005 838
- US-A1- 2017 332 828

## Description

The present invention relates to a lever-operated dispensing unit for use in espresso machines, as well as an espresso machine comprising one or more lever-operated dispensing units.

Lever-operated units, also known as piston dispensers, are well known in the field of espresso machines as they promoted the birth and development of espresso coffee, whereby a machine with such dispenser is known by many operators in the field as the real Italian espresso machine.

The term lever-operated dispenser unit for an espresso machine, is intended to designate a device comprising a housing, mainly extending in a vertical direction, between a lower base and an upper cross member, a shaft located within said housing and freely translating along said vertical extent. The shaft has an upper end and a lower end. A first opening is formed in said lower base of the housing and the lower end of the shaft extends through said opening below the base. A disk, acting as a piston, is attached to the lower end of said shaft perpendicularly to the vertical axis thereof. A second opening formed in the upper cross member of said housing, is aligned with the upper end of said shaft that protrudes therefrom.

An elastic element, practically a helical spring, is fitted coaxial with the shaft between said disk carried by the lower end of the shaft and said upper cross member of the housing. A lever in the form of a rod, is operably connected, with one of its ends, to said upper end of said shaft with the interposition of a cam mechanism mounted to a pin whose axis is perpendicular to the vertical axis of the shaft.

Finally, the device is equipped with coupling means located at said first opening of the base of the housing and adapted to receive and retain a portafilter for a given dose of coffee grounds, as well as means adapted to actuate the hot water supply in the portafilter, when the latter is placed against the opening of the base.

In order to prepare coffee with the above discussed lever-operated dispenser, once the portafilter has been positioned, with the prescribed dose of coffee grounds, under the opening of the base of the housing, the operator will manually pull down the lever thereby imparting an angular displacement thereto relative to the housing.

By the aforementioned cam mechanisms, the lever will lift the shaft whose end has the disk attached thereto. The latter will compress the elastic member in the housing between the disk and the upper cross member of the cage-like housing.

The angular displacement of the lever is stopped by the cam mechanism when the compression of the elastic element reaches a predetermined value and the cam mechanism reaches a section of the profile that corresponds to a stall position for the lever.

Then by imparting a slight angular displacement to the lever, the operator will exit the stall position and start dispensing of the beverage.

This will occur by automatic actuation of the hot water supply means, which supply hot water toward the portafilter and by expansion of the elastic element which releases the energy accumulated during compression on the disk, which now acts as a piston.

As the beverage is being dispensed, the expansion of the elastic element also causes the lever to return to its initial or stand-by position.

When the dose of coffee grounds is in the portafilter and the hot water flows through the dose to form the beverage, i.e. during normal operation of the dispenser, the angular return movement of the lever occurs gradually and slowly without causing any danger to the operator, who is close to the machine.

It was found in practice that, particularly when several operators use the coffee machine, the lever may be displaced and the elastic element may be compressed, with no suitable dose of coffee grounds in the portafilter or with the portafilter not properly coupled under the opening of the base of the housing.

In this case, as the lever is moved away from its stall position, which automatically will start beverage dispensing, the lever will be suddenly and quickly returned to its initial position, as its travel cannot be slowed down by the opposition of the hot water flow through the beverage forming dose upon the disk-piston.

This will potentially create a danger for the operator, who may be hit by the free end of the lever, as the latter abruptly return to its initial or stand-by position. A document disclosing the features of the preamble of claim 1 is known from US 2017/332828.

In view of the above, an object of the present invention is to provide a lever- or piston-operated dispensing unit for use in espresso machines that does not cause the aforementioned danger if no dose of coffee grounds is located in the portafilter or if the portafilter is inadequately positioned or is not placed at all on the dispenser.

A further object of the invention is to provide a lever- or piston-operated dispensing unit for use with an espresso machine that provides the operator with an auxiliary force, if required, in carrying out the elastic element loading operation by imparting a power-assisted angular displacement of the lever.

These and other objects, as better explained hereafter, are fulfilled by a lever-actuated dispenser unit for espresso machines as defined in the accompanying claim 1.

The invention will be now described in greater detail with reference to a preferred embodiment thereof, given by way of exemplary illustration and without limitation, and shown in the annexed drawings, in which:
- Figure 1 shows a schematic perspective view of the assembly of a lever-operated dispenser unit of the invention, without portafilter, with the lever in the stand-by position;
- Figure 2 shows a schematic perspective view of the assembly of a lever-operated dispenser unit of the invention, without portafilter, with the lever in a stall position;
- Figure 3 shows a schematic perspective, exploded view of the assembly of the parts of the lever-operated dispenser unit without the portafilter;
- Figure 4 shows a schematic cross section of the lever-operated dispenser unit of the invention with the lever in the stall position and the portafilter coupled to the unit;
- Figure 5 shows a schematic side view of an espresso machine with a lever-operated dispenser unit showing the angular path covered by the lever as it moves from the stall position to the stand-by position and vice versa.

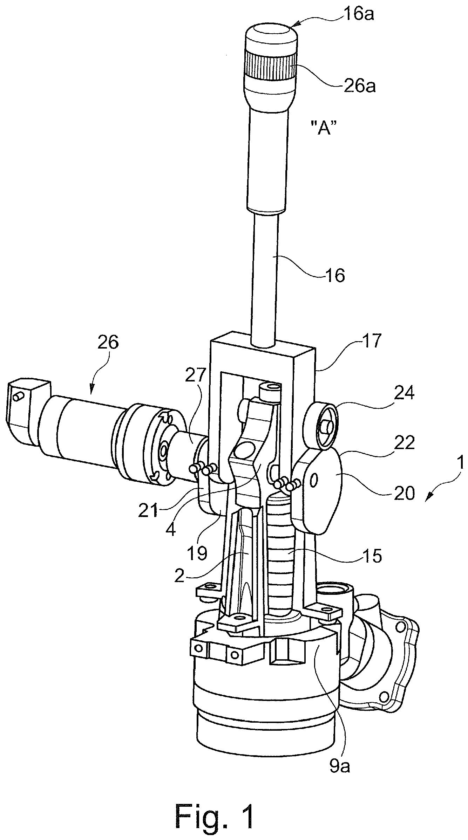

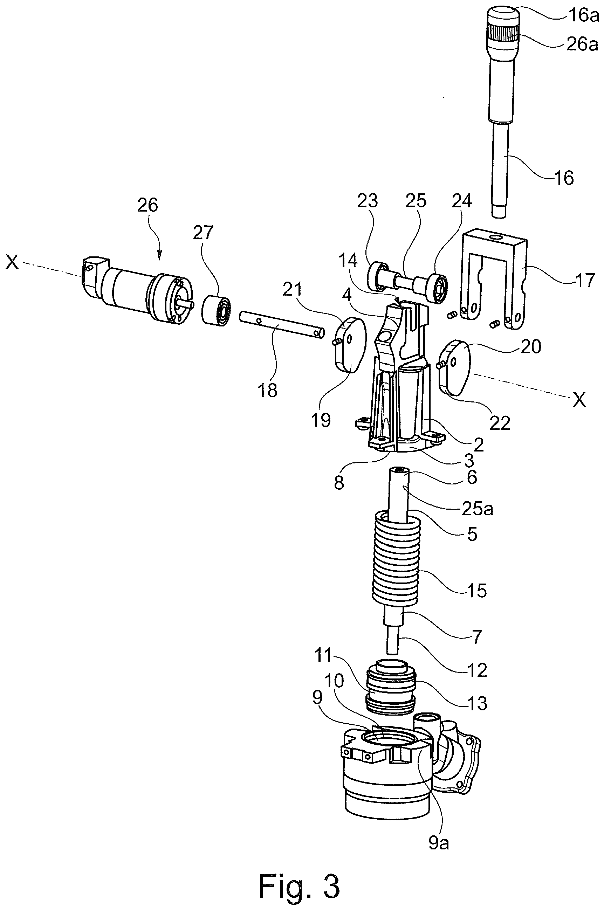

Referring to the aforementioned figures, and particularly to Figures 1, 2 and 3, the lever-operated dispenser unit is generally designated by numeral 1. It comprises a housing 2, mainly extending in a vertical direction, for example in the form of a cage, with an open lateral contour, extending between a lower base 3 and an upper cross member 4.

A shaft 5 with an upper end 6 and a lower end 7 is placed in said housing 2, and freely translates along said vertical extent. A first opening 8 is formed in said lower basement 3 of the housing 2. The lower end 7 of the shaft 5 extends through said opening 8 below the base 3 by penetrating in a chamber 9 of a body 9a, having a passage 10 aligned with the opening 8 of the base 3.

A disk 11, which also acts as a piston, is attached to the lower end 7 of the shaft 5, by means of a threaded section 12, perpendicular to the vertical axis of the shaft. The piston disk 11 is equipped with conventional sealing rings 13, which are adapted to cooperate with the inner cylindrical wall of the chamber 9, while the beverage is being dispensed, as further explained below.

A second opening 14 formed in the upper cross member 4 of said housing 2, is aligned with the upper end 6 of the shaft 5 that projects out of it.

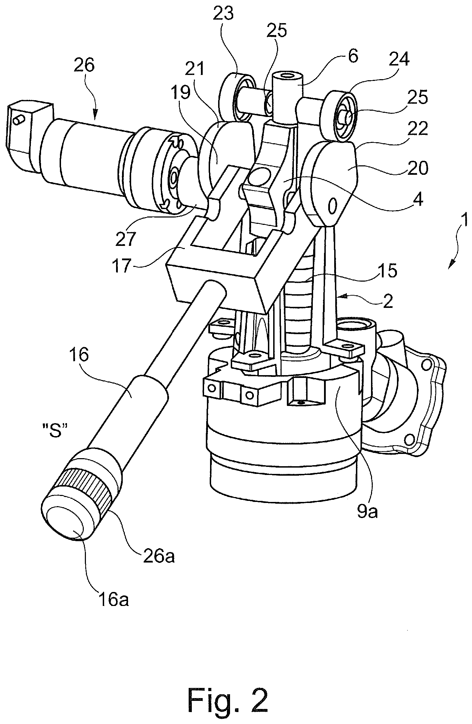

An elastic element, practically a helical spring 15, is placed coaxial with the shaft 5, between said disk 11 carried by the lower end 7 of the shaft 5 and said upper cross member 4 of the housing 2. A lever in the form of a rod 16, with a free end 16a and an opposite fork-shaped end 17, is mounted to the housing 2 via a pin 18 and is adapted to be angularly displaced about the axis X-X, coinciding with said pin 18, between a first stand-by position "A", as shown in Figure 1, and a second stall position, "S", as shown in Figure 2, that will be further explained below.

The cams 19 and 20 are mounted to the same pin 18, and their profiles 21 and 22 are slidingly engaged with respective ball bearings 23 and 24 carried by the pin 25 which is transversely engaged in the hole 25a in the end 6 of the shaft 5.

The cams 19 and 20 mounted to the pin 18, and rigidly joined thereto, and the bearings 23 and 24 carried by the shaft 25 form a cam and cam follower mechanism that provides functional connection between the lever 16 and the upper end 6 of said shaft 5.

According to the invention, the rotor of a DC electric motor, generally referenced 26 in Figure 1 is fitted on the same axis X-X of the pin 18 with the interposition of an axial coupling device 27 which, according to one embodiment of the invention, affords rotary coupling between the rotor of the motor and the pin 18 in one direction of rotation, as more clearly explained hereinafter.

According to a non-limiting embodiment, the aforementioned rotor is of the type comprising permanent magnets.

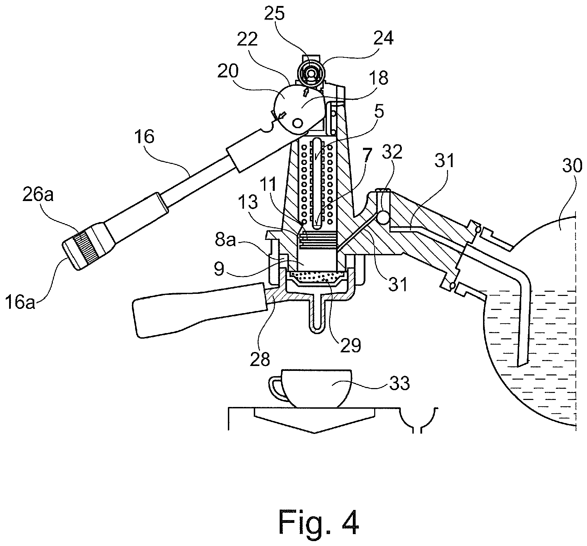

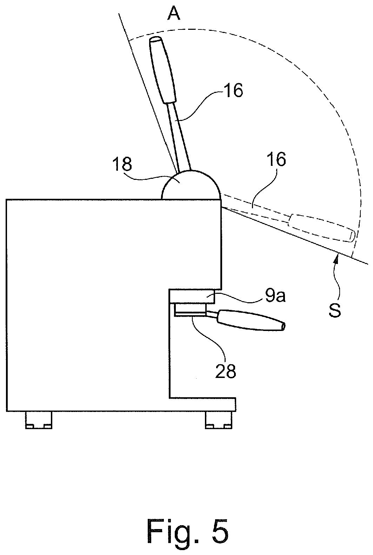

Referring to Figures 4 and 5, it will be noted that in order to prepare espresso using a lever unit of the invention, a portafilter 28 with a predetermined dose 29 of coffee grounds therein, is placed below the dispensing chamber 9 using conventional coupling means 8a to hold it in its proper position.

The chamber 9 is in communication with a hot water source 30, via a conduit 31 that is shut off by a controllable valve 32.

The dispensing operation is set up by the operator by angularly displacing the lever 16 about the axis X-X, from its stand-by position A, as shown in Figures 1 and 5, to its stall position, S, as shown in Figure 2 and in Figure 5. Such angular displacement of the lever 16, will cause, by means of the cams 21 and 22 in contact with the ball bearings 23 and 24, the lifting of the shaft 5 with its disk - piston 11.

The latter causes the helical spring 15 to be compressed against the cross member 4 of the housing 2. The spring remains in this compressed position as long as the lever 16 remains in its stall position S as determined by a particular section of the profiles 21 and 22 of the cams 19 and 20.

When a beverage is to be prepared, a small thrust exerted on the lever 16 will cause it to exit the stall position, thereby releasing the spring 15 from its compression state, and causing the disk 11 to fall down into the chamber 9 and press the hot water through the dose of coffee grounds in the underlying portafilter 28. The dispensed beverage is collected in the cup 33.

At the same time as the disk - piston 11 moves down, the lever 16 is angularly moved back to the stand-by position A at a slower speed, due to the opposition against the disk 11 of the hot water flow that is forming the beverage within the chamber 9.

With such kind of movement, the angularly moving free end 16a of the lever 16 does not cause dangerous situations for the operator.

Conversely, if the portafilter 28 has been placed in a wrong position or with no dose of coffee grounds therein, the displacement of the lever 16 from the stall position "S" for dispensing the beverage will cause a quick return thereof to the stand-by position "A", because no opposition force is exerted upon the disk-piston 11.

According to the invention, in these circumstances, the displacement of the lever 16 is braked by the DC motor 26, whose stator, in case of an entirely manual operating selection, is short-circuited. This is because the rotor which is fitted on the pin 18, is rotated by the rising shaft 5 and by the movement of the cams 19, 20, whose profiles are engaged with the cam followers formed by the ball bearings 23 and 24, and generates a magnetic field that is counteracted by the one induced in the short-circuited stator.

The safety of the operator is thus ensured even in this case of wrong placement of the unit.

According to an alternative embodiment of the invention, the motor 26 does not only act as a brake to counteract the fast upward movement of the lever 16 when the portafilter 28 is not properly attached or when there is no dose of coffee grounds, but may also act, being powered, as a servomotor acting on the lever 16 as it moves down under the load of the helical spring 15, when selected by the operator, e.g. with a selector 26a placed on the lever 16 itself. Here the axial coupling device 27 should afford rotary coupling in both directions of rotation.

According to a further alternative embodiment of the invention, the lever 16 may include a stress sensor, which senses the amount of force applied to the lever for angular displacement thereof and provides a corresponding signal, a receiving unit for receiving the signal corresponding to the amount of stress that has been sensed, a processing and transmitting unit for processing and transmitting a control signal for controlling power supply to said motor in proportion to the amount of the stress signal that has been sensed.

Accordingly, the coupling device 27, when the motor 26 is powered to provide partial servo assistance for manual actuation of the lever 16, must also include the possibility of a frictional operation.

## Claims

1. A dispenser unit (1) operated by a lever (16), for use in an espresso machine, comprising a housing (2) mainly extending in a vertical direction between a lower base (3) and an upper cross member (4), a shaft (5) located within said housing (2) and freely translating along said vertical extent, said shaft (5) having an upper end (6) and a lower end (7), a first opening (8) formed in said lower base (3) of the housing, said lower end (7) of the shaft (5) extending through said opening (8) below the base (3), a disk (11) attached to the lower end (7) of said shaft (5) perpendicular to the vertical axis thereof, a second opening (14) formed in the upper cross member (4) of said housing (2), aligned with the upper end (6) of said shaft (5) which projects out of said opening (14), an elastic member (15), reacting between said disk (11) carried by the lower end (7) of the shaft (5) and said upper cross member (4) of said housing (2), a rod-like lever (16), with one free end (16a) and with the opposite end (16b) operably connected to said upper end (6) of said shaft (5) with a cam (19, 20, 21, 22) and a cam follower (23, 24) mechanism interposed therebetween, said base (3) of the housing (2) being equipped with coupling means (8a) located at said first opening (8) and adapted to receive and hold a portafilter (28) for a given dose of coffee grounds, as well as means (32) for actuating hot water supply into said portafilter (28) when the latter is placed against said first opening (8), **characterized in that** said lever (16) is mounted so as to be able to be angularly displaced about a pivot (18) supported by said housing (2) with an axis (X-X) perpendicular to the vertical axis of said shaft (5), **in that** the cam (19, 20, 21, 22) of said cam mechanism is mounted to said pivot (18) and is able to be angularly displaced with said lever (16), **in that** the cam follower (23, 23) is connected to said upper end (6) of said shaft (5), and **in that** the dispenser unit includes a DC electric motor (26), whose rotor is connected to said pivot (18), and operator-selectable means (26a) for connecting and disconnecting power supply to said motor (26).

2. A dispenser unit as claimed in claim 1, **characterized in that** said operator-selectable means (26a) for connecting and disconnecting power supply to said motor (26) comprise short-circuiting of the stator winding of said electric motor (26).

3. A dispenser unit as claimed in any of claims 1 to 2, **characterized in that** the rotor of said electric motor is of the type comprising permanent magnets.

4. A dispenser unit as claimed in any of claims 1 to 3, **characterized in that** said cam follower (23, 24) connected with said upper end (6) of said shaft (5) comprises at least one ball bearing for contact with the profile (21, 22) of the cam (19, 20) of the cam mechanism.

5. A dispenser unit as claimed in any of claims 1 to 4, **characterized in that** said means (26a) for connecting and disconnecting power supply to said motor (26) are placed on said lever (16).

6. A dispenser unit as claimed in any of claims 1 to 5, **characterized in that** said means (26a) for connecting and disconnecting power supply to said motor (26) comprise a stress sensor, which senses the amount of force applied to said lever (16) for angular displacement thereof and provides a corresponding signal, a receiving unit for receiving the signal corresponding to the amount of stress that has been sensed, a processing and transmitting unit for processing and transmitting a control signal for controlling power supply to said motor in proportion to the amount of the stress signal that has been sensed.

## Patentansprüche

1. Eine durch einen Hebel (16) betätigte Spendereinheit (1) zur Verwendung in einer Espressomaschine, umfassend ein Gehäuse (2), das sich hauptsächlich in vertikaler Richtung zwischen einer unteren Basis (3) und einem oberen Querträger (4) erstreckt; eine Welle (5), die sich innerhalb des Gehäuses (2) befindet und sich entlang der vertikalen Ausdehnung frei verschiebt; wobei die Welle (5) ein oberes Ende (6) und ein unteres Ende (7) aufweist; eine erste Öffnung (8) in der unteren Basis (3) des Gehäuses ausgebildet ist; das untere Ende (7) der Welle (5) sich durch die Öffnung (8) unterhalb der Basis (3) erstreckt; eine Scheibe (11) am unteren Ende (7) der Welle (5) senkrecht zu ihrer vertikalen Achse angebracht ist; eine zweite Öffnung (14), die in dem oberen Querträger (4) des Gehäuses (2) ausgebildet ist und mit dem oberen Ende (6) der Welle (5) ausgerichtet ist, die aus der Öffnung (14) herausragt; ein elastisches Element (15), das zwischen der Scheibe (11), die vom unteren Ende (7) der Welle (5) getragen wird, und dem oberen Querträger (4) des Gehäuses (2) reagiert; ein stangenähnlicher Hebel (16), der mit einem freien Ende (16a) und mit dem gegenüberliegenden Ende (16b), mit dem oberen Ende (6) der Welle (5) mit einem Nocken (19, 20, 21, 22) und einem dazwischenliegenden Nockenfolgermechanismus (23, 24) funktionsfähig verbunden ist; die Basis (3) des Gehäuses (2) mit Kupplungsmitteln (8a), die an der ersten Öffnung (8) angeordnet und dazu geeignet sind, einen Siebträger (28) für eine gegebene Dosis gemahlenen Kaffees aufzunehmen und zu halten, sowie mit Mitteln (32) zur Betätigung der Warmwasserversorgung in den Siebträger (28), wenn dieser gegen die erste Öffnung (8) gelegt wird, ausgestattet ist, **dadurch gekennzeichnet, dass** der Hebel (16) so montiert ist, dass er um einen Drehpunkt (18), der von dem Gehäuse (2) getragen wird, mit einer Achse (X-X) senkrecht zur vertikalen Achse der Welle (5) winkelverschoben werden kann; dass der Nocken (19, 20, 21, 22) des Nockenmechanismus an dem Drehpunkt (18) angebracht ist und mit dem Hebel (16) winkelverschoben werden kann; der Nockenfolger (23, 23) mit dem oberen Ende (6) der Welle (5) verbunden ist; und dass die Spendereinheit einen elektrischen Gleichstrommotor (26), dessen Rotor mit dem Drehpunkt (18) verbunden ist, und bedienereinstellbare Mittel (26a) zum Einschalten und Ausschalten der Stromversorgung des Motors (26) beinhaltet.

2. Spendereinheit wie in Anspruch 1 beansprucht, **dadurch gekennzeichnet, dass** die bedienereinstellbare Mittel (26a) zum Einschalten und Ausschalten der Stromversorgung des Motors (26) das Kurzschließen der Statorwicklung des Elektromotors (26) umfassen.

3. Spendereinheit wie in irgendeinem der Ansprüche von 1 bis 2 beansprucht, **dadurch gekennzeichnet, dass** der Rotor des Elektromotors von dem Typ ist, der Permanentmagnete umfasst.

4. Spendereinheit wie in irgendeinem der Ansprüche von 1 bis 3 beansprucht, **dadurch gekennzeichnet, dass** der mit dem oberen Ende (6) der Welle (5) verbundene Nockenfolger (23, 24) mindestens ein Kugellager zum Kontakt mit dem Profil (21, 22) des Nockens (19, 20) des Nockenmechanismus umfasst.

5. Spendereinheit wie in irgendeinem der Ansprüche von 1 bis 4 beansprucht, **dadurch gekennzeichnet, dass** die Mittel (26a) zum Einschalten und Ausschalten der Stromversorgung des Motors (26) am Hebel (16) angeordnet sind.

6. Spendereinheit wie in irgendeinem der Ansprüche von 1 bis 5 beansprucht, **dadurch gekennzeichnet, dass** die Mittel (26a) zum Einschalten und Ausschalten der Stromversorgung des Motors (26) einen Stresssensor, der den auf den Hebel (16) zu dessen Winkelverschiebung ausgeübten Kraftbetrag erfasst und ein entsprechendes Signal bereitstellt; eine Empfangseinheit zum Empfangen des Signals, das der Menge des erfassten Stresses entspricht; eine Verarbeitungs- und Sendeeinheit zum Verarbeiten und Senden eines Steuersignals zum Steuern der Stromversorgung des Motors proportional zur Menge des erfassten Stresssignals umfassen.

## Revendications

1. Unité de distribution (1) actionnée par un levier (16), pour l'utilisation dans une machine à expresso, comprenant un logement (2) s'étendant principalement dans une direction verticale entre une base inférieure (3) et une traverse supérieure (4), un arbre (5) agencé à l'intérieur dudit logement (2) et translatant librement le long de ladite extension verticale, ledit arbre (5) ayant une extrémité supérieure (6) et une extrémité inférieure (7), une première ouverture (8) formée sur ladite base inférieure (3) du logement, ladite extrémité inférieure (7) de l'arbre (5) s'étendant à travers ladite ouverture (8) en-dessous de la base (3), un disque (11) attaché à l'extrémité inférieure (7) dudit arbre (5) perpendiculaire à l'axe vertical de celui-ci, une deuxième ouverture (14) formée sur la traverse supérieure (4) dudit logement (2), alignée avec l'extrémité supérieure (6) dudit arbre (5) qui fait saillie de ladite ouverture (14), un élément élastique (15), qui réagit entre ledit disque (11) transporté par l'extrémité inférieure (7) de l'arbre (5) et ladite traverse supérieure (4) dudit logement (2), un levier similaire à une tige (16), avec une extrémité libre (16a) et avec l'extrémité opposée (16b) reliée de manière opérationnelle à ladite extrémité supérieure (6) dudit arbre (5) avec une came (19, 20, 21, 22) et un mécanisme à galet suiveur (23, 24) interposé entre elles, ladite base (3) du logement (2) étant munie de moyens de couplage (8a) situés dans ladite première ouverture (8) et adaptés pour recevoir et retenir un porte-filtre (28) pour une dose donnée de café moulu, ainsi que de moyens (32) pour activer l'alimentation en eau chaude dans ledit porte-filtre (28) quand ce dernier est placé contre ladite première ouverture (8), **caractérisée en ce que** ledit levier (16) est monté de façon à pouvoir être déplacé de manière angulaire autour d'un pivot (18) supporté par ledit logement (2) avec un axe (X-X) perpendiculaire à l'axe vertical dudit arbre (5), **en ce que** la came (19, 20, 21, 22) dudit mécanisme à came est montée sur ledit pivot (18) et peut d'être déplacée de manière angulaire avec ledit levier (16), **en ce que** le galet suiveur (23, 24) est relié à ladite extrémité supérieure (6) dudit arbre (5), et **en ce que** l'unité de distribution inclut un moteur électrique CC (26), dont le rotor est relié audit pivot (18), et des moyens sélectionnables par l'opérateur (26a) pour connecter et déconnecter l'alimentation électrique audit moteur (26).

2. Unité de distribution selon la revendication 1, **caractérisée en ce que** lesdits moyens sélectionnables par l'opérateur (26a) pour connecter et déconnecter l'alimentation électrique audit moteur (26) comprennent une mise en court-circuit de l'enroulement du stator dudit moteur électrique (26).

3. Unité de distribution selon l'une quelconque des revendications 1 à 2, **caractérisée en ce que** le rotor dudit moteur électrique est du type comprenant des aimants permanents.

4. Unité de distribution selon l'une quelconque des revendications 1 à 3, **caractérisée en ce que** ledit galet suiveur (23, 24) relié à ladite extrémité supérieure (6) dudit arbre (5) comprend au moins un palier à billes pour entrer en contact avec le profil (21, 22) de la came (19, 20) du mécanisme à came.

5. Unité de distribution selon l'une quelconque des revendications 1 à 4, **caractérisée en ce que** lesdits moyens (26a) pour connecter et déconnecter l'alimentation électrique audit moteur (26) sont placés sur ledit levier (16).

6. Unité de distribution selon l'une quelconque des revendications 1 à 5, **caractérisée en ce que** lesdits moyens (26a) pour connecter et déconnecter l'alimentation électrique audit moteur (26) comprennent un capteur de contrainte, qui détecte la quantité de force appliquée audit levier (16) pour le déplacement angulaire de celui-ci et fournit un signal correspondant, une unité de réception pour recevoir le signal correspondant à la quantité de contrainte qui a été détectée, une unité de traitement et de transmission pour traiter et transmettre un signal de contrôle pour contrôler l'alimentation électrique audit moteur proportionnellement à la quantité de signal de contrainte qui a été détectée.
